Europäisches Patentamt

European Patent Office

Office européen des brevets

(19)

(11) Publication number: 0 504 958 A2

# EUROPEAN PATENT APPLICATION

(12)

(21) Application number: 92200535.0

(22) Date of filing: 25.02.92

(51) Int. Cl.5: B60P 1/43

Priority: 200391 ITU RE9100018.

(30) Priority: 20.03.91

(43) Date of publication of application:
23.09.92 Bulletin 92/39

(84) Designated Contracting States:
AT BE CH DE DK ES FR GB GR IT LI LU MC
NL PT SE

(71) Applicant: Mazzoli, William

5, Via de Amicis
I-42042 Fabbrico (Reggio Emilia)(IT)

(72) Inventor: Mazzoli, William
5, Via de Amicis
I-42042 Fabbrico (Reggio Emilia)(IT)

(74) Representative: Corradini, Corrado et al
Studio Ing. C. CORRADINI & C. S.r.l. 4, Via
Dante Alighieri
I-42100 Reggio Emilia(IT)

(54) **Apparatus for van-type vehicles which acts as an inclined ramp for goods loading and unloading.**

(57) The apparatus comprises: a substantially flat rigid structure of extent substantially not greater than the vertical aperture (3) provided in the vehicle loading compartment (2); a hinge means (30) fixed in proximity to one of the lower corners of said aperture (3) and comprising a first rotary pin (31)-bush (32) pair, the axis of rotation of which possesses at least one vertical position corresponding with a lateral edge of said aperture (3), and a second rotary pin (33)-bush (34) pair, the axis of rotation of which possesses at least one horizontal position corresponding with the lower edge of said aperture (3); the flat structure (10) is fixed by a lower corner to the hinge means (30) to be able to rotate about said horizontal axis between a lowered position in which it rests on the ground, and a vertical or nearly vertical position in which it is coplanar with said aperture (3), and also to be able to rotate about said vertical axis while always remaining in a raised position; the axis of the first rotary pair (31), (32) lies in proximity to a lateral edge of the structure (10) when this is in a raised position, and the axis of the second rotary pair (33), (34) lies in proximity to the lower edge of the flat structure (10).

FIG. 2

This invention relates to van-type vehicles, in particular motor vans, comprising a goods-containing compartment provided with at least one aperture for introducing and extracting the goods into and from the compartment.

An object of the present invention is to provide an apparatus able to act as an inclined ramp for goods loading and unloading which is securely connected to the vehicle in proximity to said aperture, which can be raised and contained within the load compartment, and which does not obstruct passage through said aperture even when in its raised position.

A further object is to enable said apparatus to also act as a door of vertical hinging axis, for closing said aperture.

A further object of the invention is to give the loading/unloading ramp a relatively small angle of inclination to facilitate goods loading/unloading.

A further object of the invention is to make the apparatus constructionally simple and economical and able to be installed in general on any vehicle, even on those not designed with this in mind.

Said objects are attained according to the invention as characterised in the claims.

The invention is described in detail hereinafter with the aid of the accompanying figures, which illustrate one embodiment thereof.

Figure 1 is a section on a vertical longitudinal plane (indicated by I-I in Figure 2) through the apparatus of the invention applied to the rear end of a van-type vehicle.

Figure 2 is a plan view from above of Figure 1.

Figure 3 is an enlarged detail of Figure 1.

Figure 4 is an enlarged detail of Figure 1 viewed sideways in the direction of the arrow IV.

Figure 5 is an enlarged detail of Figure 2 viewed sideways in the direction of the arrow V.

The vehicle to which the apparatus of the invention (and of which only the rear end portion is visible in the figures) is applied is indicated overall by 1. The reference numeral 2 indicates the goods-containing compartment and 3 indicates an aperture provided in a substantially vertical plane in one wall of the compartment 2 for the introduction and extraction of the goods.

The compartment 2 is bounded lowerly by a flat plate 4 defining the vehicle loading floor and forming part of the vehicle structure; laterally and upperly the compartment is bounded by walls 6 and a roof 7.

The apparatus according to the invention comprises a substantially flat rigid structure 10 of extent substantially not greater then the aperture 3 in the compartment 2. It also comprises a hinge means 30 fixed to the structure of the compartment 2, in particular to a beam 5 of the vehicle, in proximity to a lower corner of the aperture 3.

The hinge means 30 comprises a first rotary pin 31-bush 32 pair, the axis of rotation of which possesses a vertical position corresponding with a lateral edge of the aperture 3, and a second rotary pin 33-bush 34 pair, the axis of rotation of which possesses at least one horizontal position corresponding with the lower edge of the aperture 3.

In the embodiment of the hinge means 30 shown in the figures, the first pin 31 has a vertical axis and is to be fixed at its lower end to the beam 5 of the vehicle 1; the first bush 32 is rotationally engaged with the pin 31 and supports the second pin 33 which is fixed rigidly into a transverse hole in the bush 32; the pin 33 has a horizontal axis and is rotationally engaged with the second bush 34.

To prevent axial withdrawal of the bush 34 from the pin 33, the bush 34 is provided with a transverse peg 35 the inner end of which enters a circumferential groove 36 provided in the pin 33.

The bush 34 can therefore rotate about the axis of the pin 33 and this axis can rotate about the axis of the pin 31.

One of the lower corners of the flat structure 10 is fixed by a fixing lug 37 to the bush 34; the hinge means 30 is connected geometrically to the flat structure 10 such that the vertical axis of the pin 31 lies in proximity to or coincident with the lateral edge of the structure 10 when this latter is in its raised position, and the horizontal axis of the pin 33 lies in proximity to or coincident with the horizontal lower edge of the structure 10.

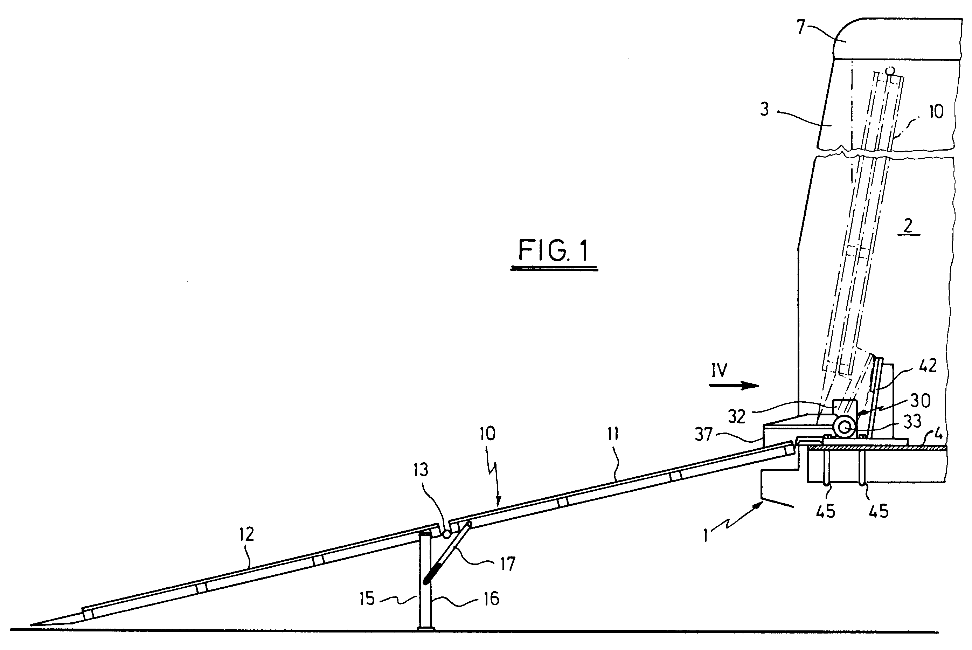

On halting the rotation of the hinge means 30 about the pin 31 in a position such that the axis of the pin 33 is coplanar with the aperture 3, this axis lies in a position corresponding with the lower edge of the aperture 3, and the structure 10 can be rotated about this axis to be moved into a lowered position (shown by full lines in Figure 1) in which it rests with its horizontal edge on the ground, or be moved into a raised position which is vertical or slightly inclined to the vertical (illustrated by dashed lines in Figure 1), and in which it is virtually coplanar with the aperture 3.

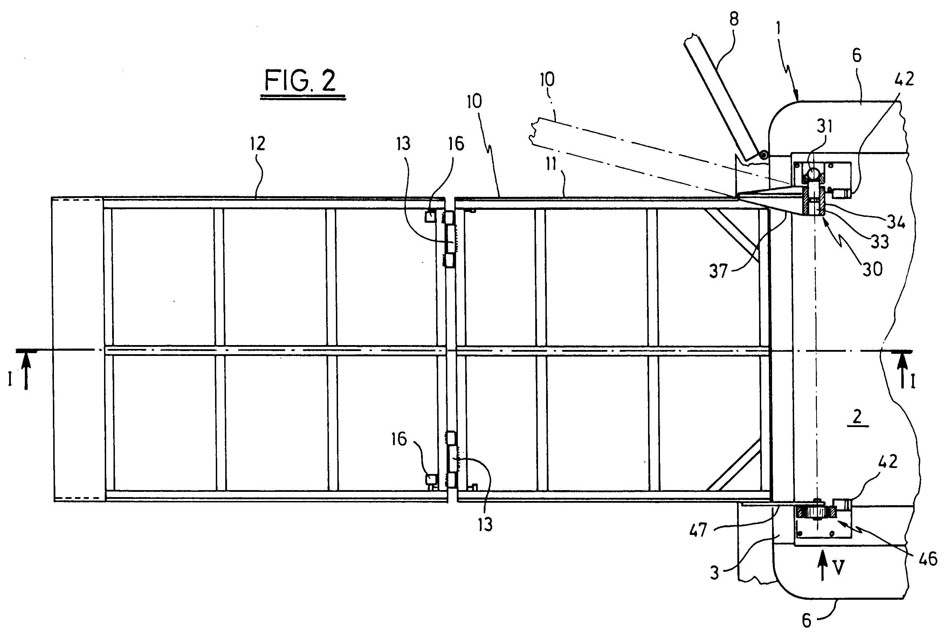

Again, on halting the rotation of the hinge means 30 about the pin 33 when the flat structure 10 is in its raised position, this latter can rotate about the axis of the pin 31 between a position in which it is virtually coplanar with the aperture 3 (shown by dashed lines in Figure 1) and a position in which it leaves the aperture 3 open (shown by dashed lines in Figure 2).

When moved into its lowered position, the structure 10 acts as an inclined ramp for goods loading/unloading.

In contrast, when the flat structure 10 is not used it is moved into its raised position virtually coplanar with the aperture 3 and is closed within the compartment 2 by a possible external door 8 (of usual type) for closing the aperture 3.

If it is desired to leave the aperture 3 free for access to the compartment 2 without wishing to lower the structure 10, after opening the door 8 outwards the structure 10 is rotated outwards about the axis of the pin 31 while maintaining it in its raised position.

Consequently when not in use, the structure 10 can be conveniently enclosed within the compartment 2 in which it takes up very little room, and in addition can be easily and quickly rotated to completely free the aperture 3.

In addition, the flat structure 10 can also be used as a door for closing the aperture 3 in substitution of the normal door 8.

In proximity to that lower corner of the flat structure 10 opposite the corner fixed to the bush 34, there is provided an idle wheel 41 (shown in Figure 5) pivoted to a second lug 47 parallel to and opposing the lug 37 fixed to the structure 10; the axis of the wheel 41 substantially coincides with the axis of the pin 33.

There is also provided a releasable locking means 46 able to lock said wheel 41 when the axis of the pin 33 corresponds with the lower edge of the aperture 3. In the embodiment shown in Figure 5, the locking means 46 comprises an element 48 defining a U-shaped cavity facing outwards horizontally to receive the wheel 41; a latch 49, hinged to the element 48 and pulled downwards by a spring 50, closes and locks the wheel 41 within the cavity of the element 48. The wheel 41, when locked by the means 46 in this manner, defines a hinge connection which cooperates with the hinge means 30. The means 46 is shown in detail in Figure 5.

To the side of the bush 32 there is fixed a plate 42, the final portion of which is inclined upwards and rearwards, and against which the connection lug 37 rests when the structure 10 is in its raised position; said plate 42 acts as an abutment means to halt the rotation of the structure 10 and as a resting means to retain the structure 10 in its raised position.

In the illustrated embodiment, the pin 31 is fixed via its lower end to a horizontal plate 44, this being provided with bent-shank bolts 45 by which it is fixed rigidly to the structure of the compartment 2, and in particular to a beam 5.

By virtue of these or analogous means the apparatus can be installed in general on any van-type vehicle even if not originally designed to receive the apparatus.

In the illustrated embodiment, the flat structure 10 is composed of two flat elements 11 and 12 hinged together by hinges 13 positioned along a common horizontal upper edge, and which close together in "book" form when the structure 10 is in its raised position, and can be opened to extend along a single common plane with the outer horizontal edge resting on the ground to form a loading ramp of double length and hence of smaller inclination to the horizontal.

The element 11 is connected at its lower edge to the means 30 and to the wheel 41 by the lugs 37 and 47, whereas the element 12 is free to rotate about the element 11 as it is fixed to this by the hinges 13.

In proximity to the mutually hinged edges of the elements 11 and 12 there are provided support means 15 acting as a ground support for the elements 11 and 12 when they are extended along a common plane to rest on the ground (as shown by full lines in Figure 1).

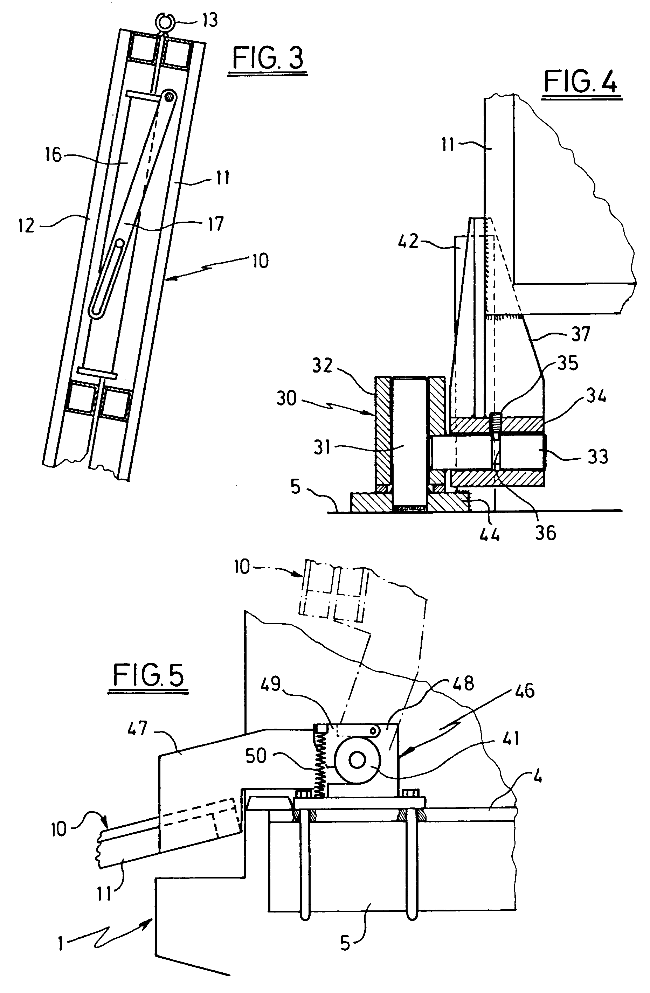

The support means 15 comprise two legs 16 hinged at their upper end to an element 11 or 12 and maintained in a vertical position by respective bars 17 provided with a slot. When the two elements 11 and 12 are closed together in the manner of a book, the support means 15 are enclosed by the two flat elements 11 and 12 (as shown in Figure 3).

Further means can obviously be applied to the apparatus of the invention to improve its stability, for example bolts or other means for locking the flat structure 10 in its closed position when the vehicle is moving, or spring means to facilitate the raising of the flat structure.

Modifications of a practical or applicational nature can be made. For example, the hinge means 30 can be modified such that the horizontal axis of the pin 33 is fixed relative to the vehicle and the axis of the pin 31 can rotate about the axis of the pin 33 (hence also assuming a vertical position).

**Claims**

1. An apparatus for van-type vehicles which acts as an inclined ramp for goods loading and unloading, characterised by comprising:
   - a substantially flat rigid structure of extent substantially not greater than the vertical aperture (3) provided in the vehicle loading compartment (2);
   - a hinge means (30) fixed in proximity to one of the lower corners of said aperture (3) and comprising a first rotary pin (31)-bush (32) pair, the axis of rotation of which possesses at least one vertical position corresponding with a lateral edge of said aperture (3), and a second rotary pin (33)-bush (34) pair, the axis of rotation of which possesses at least one horizontal position corresponding with the lower edge of said aperture (3);
   - the flat structure (10) being fixed by a lower corner to the hinge means (30) to be able to rotate about said horizontal axis between a lowered position in which it rests on the ground, and a vertical or nearly vertical position in which it is substantially coplanar with said aperture (3), and also to be able to rotate about said vertical axis while always remaining in a raised position;

- the axis of the first rotary pair (31), (32) lying in proximity to or coinciding with a lateral edge of the structure (10) when this is in a raised position, and the axis of the second rotary pair (33), (34) lying in proximity to or coinciding with the lower edge of the flat structure (10).

2. An apparatus as claimed in claim 1, characterised in that the flat structure (10) comprises two flat elements (11) and (12) hinged together along a common horizontal upper edge, and support means (15) acting as a ground support and fixed to the flat structure (10) in proximity to said mutually hinged edges, said two flat elements (11) and (12) being closed together in "book" form when the flat structure (10) is in its raised position, with said support means (15) enclosed between the two flat elements (11) and (12); said two flat elements (11) and (12) also being able to be extended along a common plane with the outer horizontal edge resting on the ground and said support means (15) resting on the ground.

3. An apparatus as claimed in claim 1, characterised in that said hinge means (30) comprises:
   - a first pin (31) of vertical axis to be fixed to the structure of the vehicle compartment (2);
   - a first bush (32) rotatably engaged with said first pin (31);
   - a second pin (33) of horizontal axis supported by and rigid with said first bush (31);
   - a second bush (34) rotatably engaged with said second pin (33); one of the lower corners of the flat structure (10) being fixed by a fixing lug (37) to said second bush (34) such that the vertical axis of the first pin (31) lies in proximity to or coincident with the lateral edge of the flat structure (10) when in its raised position, and the horizontal axis of the second pin (33) lying in proximity to or coincident with the horizontal lower edge of the flat structure (10).

4. An apparatus as claimed in claim 3, characterised by comprising, in proximity to that lower corner of the flat structure (10) opposite the corner fixed to the second bush (34):
   - an idle wheel (41) pivoted to the flat structure (10) with its axis coinciding with the horizontal axis of the second pin (33);
   - a releasable locking means (46) able to lock said wheel (41) when the axis of the second pin (33) corresponds with the lower edge of the aperture (3).

5. An apparatus as claimed in claim 3, characterised by comprising a plate (42) fixed in proximity to the first bush (32) to define abutment and resting means for the connection lug (37) when the flat structure (10) is in its raised position.

6. An apparatus as claimed in claim 3, characterised in that said first pin (31) is fixed by its lower end to a horizontal plate (44) provided with means (45) for its rigid connection to the structure of the vehicle compartment (2).

FIG. 1

EP 0 504 958 A2

## FIG. 2

EP 0 504 958 A2

FIG. 3

FIG. 4

FIG. 5